# EUROPEAN PATENT APPLICATION

(11) **EP 2 117 169 A1**
(43) Date of publication of application: **11.11.2009**
(21) Application number: 08855588.3
(22) Date of filing: 04.11.2008
(51) Int. Cl.: H04L 12/26

(54) **METHOD AND SYSTEM FOR AUTOMATICALLY DEBUG-TESTING NETWORK DEVICE**

(30) Priority: 14.11.2007 CN 200710177334
(71) Applicant: Huawei Technologies Co., Ltd., Longgang District Shenzhen Guangdong 518219 (CN)
(72) Inventor: WANG, Fengbao, Shenzhen Guangdong 518129 (CN)
(74) Representative: Kreuz, Georg Maria
(86) International application number: PCT/CN2008/072927
(87) International publication number: WO 2009/067877

(57) **Abstract**

A method and system for automatically commissioning network devices are provided. The method includes: finding a network device to be commissioned; determining whether to commission the network device according to the ID of the network device or a subscriber's requirements; and commissioning the network device if required. With the present invention, a remote commissioning system may be used to automatically implement subsequent commissioning; no cooperation between commissioning personnel and installation personnel is required; and no commissioning technician needs to be on site. This greatly shortens the commissioning time of network devices and improves the commissioning efficiency.

## Description

### Field of the Invention

The present invention relates to the communication field, and in particular, to a method and a system for automatically commissioning network device.

### Background of the Invention

At present, different subscribers have different requirements for network devices. Thus, technician needs to commission network devices according to the requirements of subscribers. In general, device commissioning includes three stages: preparation for data configuration, device hardware installation, and device commissioning. Among these three stages, device commissioning is the most important and has the highest requirements for technician.

In the prior art, a general commissioning method is provided. That is, after network device hardware is installed, commissioning personnel locally connect an analog controller to a device to be commissioned, for example, connect a radio network controller (RNC) simulator to a NodeB, to perform online and one-to-one manual commissioning on site. Although this method may meet the requirements of subscribers, commissioning personnel must arrive at the site. Thus, to commission a remote device, commissioning personnel need to spend lots of time on the way. As a result, the working efficiency is low.

Another method is also provided in the prior art. That is, installation personnel connect a network device to a real controller and use a local terminal after network device hardware is installed, and then commissioning personnel commission the network device online and on a one-to-one basis by remote communication means. The remote communication means may be based on a bootstrap protocol (BOOTP) technology.

In the above technical solution of the prior art, commissioning personnel do not need to arrive at the site for commissioning. To perform online and one-to-one manual commissioning, however, installation personnel must be on site to cooperate with commissioning personnel and must communicate with commissioning personnel to coordinate specific commissioning steps. The preceding method requires the close cooperation between commissioning personnel and installation personnel. This prolongs the device commissioning time and causes a low commissioning efficiency, especially when installation personnel are already on site but remote commissioning personnel are not ready.

### Summary of the Invention

According to the present invention a method and a system for automatically commissioning network device are provided so as to shorten the commissioning time of the network devices and to improve the commissioning efficiency.

According to a first aspect of the invention the method for automatically commissioning network devices includes: finding a network device to be commissioned; determining whether to commission the network device according to the identifier of the network device or a subscriber's requirement; and commissioning the network device if the network device needs to be commissioned.

According to a second aspect of the invention the remote commissioning system includes: a judging unit, adapted to determine whether to commission a device according to the identifier of the network device or a subscriber's requirement after finding the network device to be commissioned; and a commissioning unit, adapted to commission the network device after the judging unit determines that the network device needs to be commissioned.

The technical solution of the present invention includes: finding a network device to be commissioned; determining whether to commission the network device according to the identifier of the network device or a subscriber's requirements; and commissioning the network device if required. In this technical solution, a remote commissioning system is used to implement automatic commissioning; no cooperation between commissioning personnel and installation personnel is required; and no commissioning technician needs to be on site. This greatly shortens the commissioning time of network devices and improves the commissioning efficiency.

### Brief Description of the Drawings

FIG. 1 schematically illustrates a method in an embodiment of the present invention;

FIG. 2 schematically illustrates a system in an embodiment of the present invention.

### Detailed Description of the Invention

An embodiment of the present invention provides a method for automatically commissioning network device.

The method includes: determining whether to commission a network device according to the ID (Identifier) of the network device or a subscriber's requirement after finding a network device to be commissioned; and commissioning the network device if there is need to commission the network device. The network device to be commissioned may be a new network device or a network device to be upgraded.

The method further includes: before finding a network device to be commissioned, setting commissioning item on a remote commissioning system and setting corresponding commissioning operations according to the set commissioning item.

Those skilled in the art may set commissioning items on the remote commissioning system according to subscriber's requirement. The commissioning items may be such items as software upgrade, data refreshing, service upgrade and device replacement.

The specific embodiments of the present invention do not limit the setting of specific commissioning items or the setting of the commissioning operations according to the commissioning items. Commissioning item setting and commissioning setting according to the set commissioning items on the remote commissioning system or other remote commissioning systems also fall in the scope of protection described by the specific embodiments of the present invention. The remote commissioning system may be a network management system (NMS) or a system or apparatus that has remote commissioning capabilities.

The network device to be commissioned may be found automatically by the remote commissioning system or in other modes. The specific modes for finding a network device to be commissioned are as follows:
the remote commissioning system periodically monitors the network device to be commissioned, for example, pings the address; or
the network device to be commissioned sends a Dynamic Host Configuration Protocol (DHCP) request to notify the remote commissioning system; or
the network device to be commissioned starts up IP-based BOOTP to notify the remote commissioning system; or
the network device to be commissioned automatically starts up BOOTP of an ATM transmission network to notify the remote commissioning system.

The process of determining whether to commission the network device to be commissioned according to the ID of the network device or the subscriber's requirement may further include the following steps:
the network device to be commissioned sends its ID or the subscriber's requirement to the remote commissioning system through IP-based BOOTP; and
the remote commissioning system determines whether to commission the network device according to the received ID or subscriber's requirements.

The process of commissioning the network device may further include: selecting commissioning items according to attribute information of the network device to be commissioned; and commissioning the network device according to the selected commissioning items.

The attribute information of the network device may be an address, a label such as an electronic label stored in a flash memory, a type, or a version of the network device.

The process of selecting commissioning items according to attribute information of the network device to be commissioned may further include the following steps:
the network device to be commissioned carries the commissioning items in its address and sends the address to the remote commissioning system; and
the remote commissioning system extracts the commissioning items from the received address.

The commissioning items may include one or more of the following items: software upgrade, data refreshing, service upgrade, and device replacement.

According to the method in the embodiment of the present invention, multiple network devices may be commissioned at the same time. With this method, necessary commissioning items may be selected according to the attribute information of the network device, which avoids unnecessary commissioning items and further improves the commissioning efficiency.

The following describes the steps of setting commissioning items and the subsequent commissioning operations in detail with reference to an example of setting the commissioning item to software upgrade on the remote commissioning system.

In the first embodiment, set the commissioning item to software upgrade on the remote commissioning system. Then the remote commissioning system sets software upgrade commissioning according to software upgrade settings.

The specific software upgrade commissioning process is as follows: the remote commissioning system sends upgraded software to the network device to be commissioned, and then sends an instruction to instruct the network device to install the upgraded software. The network device to be commissioned in this embodiment is a new network device.

After finding the new network device and determining that the new network device needs to be commissioned, the remote commissioning system sends a commissioning message to the new network device.

After receiving the commissioning message, the new network device sends its attribute information including the commissioning item to the remote commissioning system.

The remote commissioning system knows that the commissioning item is software upgrade according to the received attribute information, and then sends the software and a software upgrade instruction to the new network device.

After receiving the software and software upgrade instruction, the new network device upgrades the software.

The specific process for the remote commissioning system to find the new network device includes:
the new network device sends its ID to the remote commissioning system; and
the remote commissioning system determines that the new network device needs to be commissioned according to the received ID.

In the first embodiment, one or more network devices may be commissioned and they may be found at same time or at different time. The specific embodiments of the present invention do not limit the mode of finding the network device to be commissioned or the number of network devices to be commissioned.

In the method of the first embodiment, after the new network device upgrades the software, the following steps may be also included:

Step 1: Testing the network device and/or detecting the performance of the network device/service to obtain performance index data; checking whether the network device is normal according to the obtained performance index data or generating an analysis report according to statistical analysis of the obtained performance index data.

The test on the network device may involve one or more of the following items: resource, network, service, and environment.

Step 2: After installation personnel or other test personnel (such as drive test personnel that do not need to arrive at the site of the network device or subscribers) verifies service, the remote commissioning system automatically records the service verification result and/or the item commissioning result and generates a commissioning report according to the service verification result or the item commissioning result.

The service verification may include a dialing test on the network device. The commissioning report is automatically generated, which avoids inaccurate records due to misoperation and improves report reliability.

In step 2, after a commissioning report is generated, the commissioning report and/or the analysis report may be sent to the remote commissioning personnel. In this way, commissioning personnel may clearly know the commissioning progress and handle any abnormal condition during commissioning, which further improves commissioning reliability.

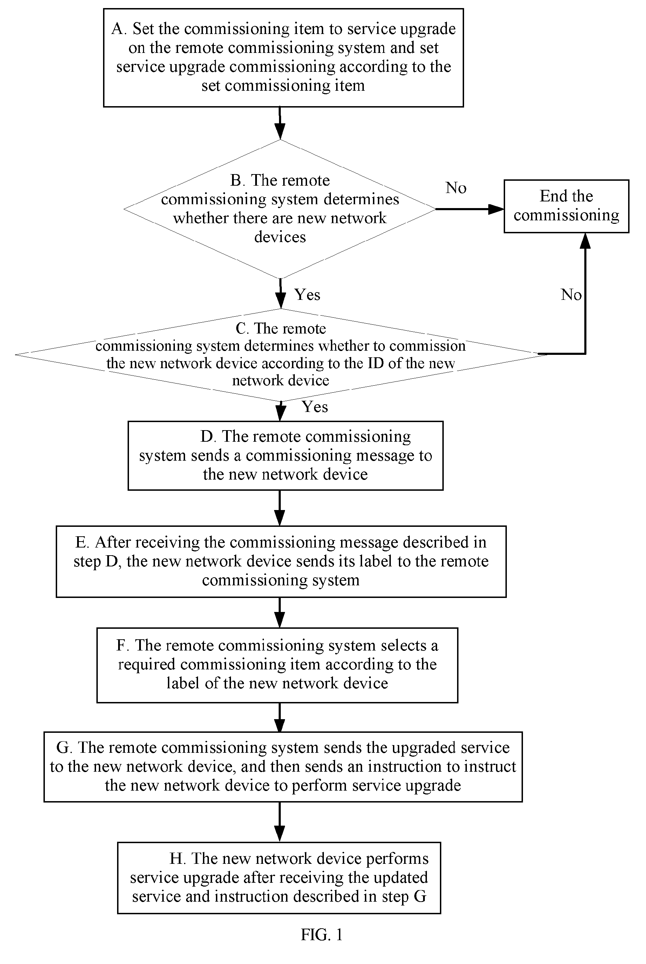

To better describe the methods in the embodiments of the present invention, the following describes the specific embodiments of the present invention in detail with reference to FIG. 1.

FIG. 1 schematically illustrates a method for automatically commissioning network devices in the second embodiment of the present invention. In the second embodiment, a new network device is to be commissioned; the specific commissioning item is service upgrade; the mode of finding the new network device is that the new network device sends a DHCP request to notify the remote commissioning system; and the attribute information of the network device is label. The method includes the following steps:

A. Setting the commissioning item related to service upgrade on the remote commissioning system and setting service upgrade commissioning according to the set commissioning item.

In actual situations, the commissioning item may include software upgrade, data refreshing, service upgrade, and device replacement. The specific commissioning process may be as follows: the remote commissioning system sends the upgraded service to the new network device, and then sends an instruction to instruct the new network device to perform service upgrade.

B. The remote commissioning system determines whether there is a new network device. After a new network device is found, the process proceeds to step C. Otherwise, the commissioning is complete.

The specific process for the remote commissioning system to determine whether there is a new network device includes the following steps:
the new network device sends a DHCP request carrying the ID of the new network device to the remote commissioning system; and
the remote commissioning system determines that there is a new network device after receiving the ID of the new network device.

C. The remote commissioning system determines whether to commission the new network device according to the received ID of the new network device. If the new network device needs to be commissioned, the process proceeds to the following steps. If the new network device does not need to be commissioned, the commissioning is complete.

D. The remote commissioning system sends a commissioning message to the new network device.

E. After receiving the commissioning message described in step D, the new network device sends its label to the remote commissioning system. The label includes the commissioning item of the new network device, that is, service upgrade.

F. The remote commissioning system selects a required commissioning item according to the label of the new network device. Specifically, the remote commissioning system knows that the commissioning item of the new network device is service upgrade according to the label of the new network device, and then selects service upgrade. Only service upgrade needs to be selected because the commissioning item in this embodiment includes only service upgrade. But the embodiment of the present invention is not limited to the item of service upgrade. If multiple items are set, corresponding commissioning items may be selected according to the attribute information of the network device.

G. The remote commissioning system sends the upgraded service to the new network device and sends an instruction to instruct the new network device to perform service upgrade.

H. The new network device performs service upgrade after receiving the upgraded service and instruction described in step G.

After service upgrade, the process may proceed to steps I and J.

I. After step H is complete, the remote commissioning system tests the performance of the network device to obtain the performance data.

J. The remote commissioning system checks whether the network device is normal according to the obtained performance data.

In steps I and J, the remote commissioning system may automatically record the service verification result and generate a commissioning report according to the service verification result. In this way, commissioning personnel may easily master the commissioning progress according to the commissioning report.

With this technical solution, a remote commissioning system may be used to implement automatic commissioning; no cooperation between commissioning personnel and installation personnel is required; and no commissioning personnel need to be on site. This greatly shortens the commissioning time of network devices and improves the commissioning efficiency.

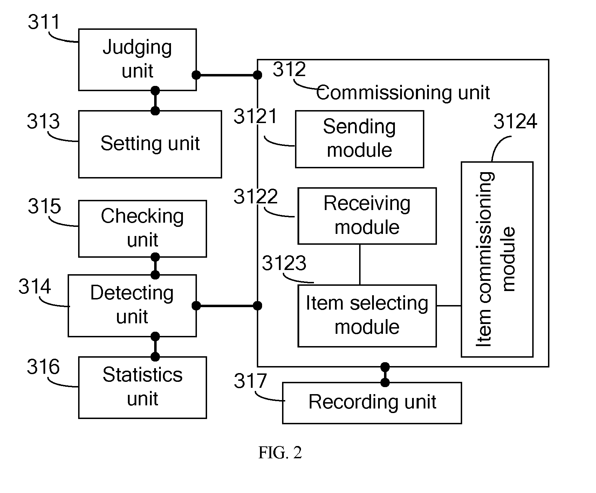

The third embodiment provides a remote commissioning system. As shown in FIG. 2, the system includes: a judging unit 311, adapted to determine whether to commission a network device according to the ID of the network device or a subscriber's requirement after finding the network device to be commissioned; a commissioning unit 312, adapted to commission the network device after the judging unit 311 determines that the network device needs to be commissioned.

In addition, the remote commission system may further includes: a setting unit 313, adapted to set a commissioning item and set corresponding commissioning operations according to the set commissioning item.

The commissioning unit 312 may further include: a sending module 3121, adapted to send a commissioning message to the network device after the judging unit 311 determines that the network device needs to be commissioned; a receiving module 3122, adapted to receive attribute information sent from the network device after the network device receives the commissioning message; an item selecting module 3123, adapted to select a commissioning item after the receiving module 3122 receives the attribute information of the network device; and an item commissioning module 3124, adapted to commission the network device according to the commissioning item selected by the item selecting module 3123.

The network device to be commissioned includes: a receiving unit, adapted to receive a commissioning message sent from a sending unit; and the sending unit, adapted to send attribute information to a remote commissioning system after the receiving unit receives the commissioning message.

In addition, the remote commissioning system further includes a detecting unit 314, a checking unit 315 or a statistics unit 316.

The detecting unit 314 is adapted to test the network device and/or detect the performance indexes of the network device to obtain performance index data after the item commissioning module 3124 commissions the selected commissioning item.

The checking unit 315 is adapted to check whether the network device is normal according to the performance index data obtained by the detecting unit 314.

The statistics unit 316 is adapted to generate an analysis report according to statistical analysis of the obtained performance index data obtained by the detecting unit 314.

In addition, the remote commissioning system may further include a recording unit 317.

The recording unit 317 is adapted to automatically record the service verification result and/or commissioning result of the selected commissioning item after the item commissioning module 3124 commissions the network device according to the selected commissioning item and generate a commissioning report according to the service verification result and/or the commissioning result.

In the preceding embodiments, the system or apparatus is divided into units according to logic function, but the division mode is not limited by the embodiments of the present invention, if only the division mode can realize those functions. In addition, the specific function unit names are only used to differentiate various function units and are not used to confine the protection scope of the present invention.

Those skilled in the art may understand that all or part of steps in the embodiments of the present invention may be completed by hardware instructed by a program, for example, by a program running in a computer. The program may be stored in a readable storage medium such as a random access memory (RAM), a magnetic disk, or a compact disk (CD).

To sum up, in the embodiments of the present invention, a remote commissioning system may be used to automatically implement subsequent commissioning; no cooperation between commissioning personnel and installation personnel is required; and no commissioning personnel need to be on site. This greatly shortens the commissioning time of network devices and improves the commissioning efficiency.

The present invention has been illustrated and described through some exemplary embodiments, but the invention is not limited to these embodiments. It is apparent that those skilled in the art may make various modifications and variations to the invention.

## Claims

1. A method for automatically commissioning network device, **characterized by**:
finding a network device to be commissioned;
determining whether to commission the network device according to the identifier of the network device or a subscriber's requirement;
commissioning the network device if the network device needs to be commissioned.

2. The method of claim 1, wherein before the finding a network device to be commissioned, further comprising:
setting commissioning item, and setting corresponding commission operations according to the set commissioning item.

3. The method of claim 1, wherein the commissioning the network device comprises:
sending, by a remote commissioning system, a commissioning message to the network device;
sending, by the network device, its attribute information to the remote commissioning system after receiving the commissioning message;
selecting, by the remote commissioning system, a commissioning item according to the attribute information and commissioning the network device according to the selected commissioning item.

4. The method of claim 3, wherein after commissioning the net work device according to the selected commissioning item, further comprising:
obtaining performance index data by testing the network device and/or detecting the performance of the network device;
checking whether the network device is normal according to the obtained performance index data or generating an analysis report according to statistical analysis of the obtained performance index data.

5. The method of claim 3, wherein after commissioning the net work device according to the selected commissioning item, further comprising:
recording automatically, by the remote commissioning system, the service verification result and/or the item commissioning result and
generating a commissioning report according to the service verification result or the item commissioning result.

6. A remote commissioning system, **characterized by**:
a judging unit, adapted to determine whether to commission a network device according to the identifier of the network device or a subscriber's requirement after finding the network device to be commissioned;
a commissioning unit, adapted to commission the network device after the judging unit determines that the network device needs to be commissioned.

7. The system of claim 6, wherein further comprising:
a setting unit, adapted to set a commissioning item and set corresponding commissioning operations according to the set commissioning item.

8. The system of claim 6, **characterized in that** the commissioning unit comprises:
a sending module, adapted to send a commissioning message to the network device after the judging unit determines that the network device needs to be commissioned;
a receiving module, adapted to receive attribute information from the network device after the network device receives the commissioning message;
an item selecting module, adapted to select a commissioning item after the receiving module receives the attribute information of the network device; and
an item commissioning module, adapted to commission the network device according to the commissioning item selected by the item selecting module.

9. The system of claim 8, further comprising:
a detecting unit, adapted to test the network device and/or detect the performance indexes of the network device to obtain performance index data after the item commissioning module commissions the selected commissioning item; and
a checking unit, adapted to check whether the network device is normal according to the performance index data obtained by the detecting unit; or
a statistics unit, adapted to generate an analysis report according to statistical analysis of the obtained performance index data obtained by the detecting unit.

10. The system of claim 8, further comprising:
a recording unit, adapted to automatically record the service verification result and/or commissioning result of the selected commissioning item after the item commissioning module commissions the network device according to the selected commissioning item and generate a commissioning report according to the service verification result and/or the commissioning result.
